(19) Europäisches Patentamt
European Patent Office
Office européen des brevets

(11) **EP 2 831 166 B1**

(12) **EUROPEAN PATENT SPECIFICATION**

(45) Date of publication and mention of the grant of the patent:
**27.12.2017 Bulletin 2017/52**

(21) Application number: **13712812.0**

(22) Date of filing: **28.03.2013**

(51) Int Cl.:
*C08L 23/04* (2006.01)      *C08L 23/06* (2006.01)
*C08L 23/00* (2006.01)

(86) International application number:
**PCT/EP2013/056795**

(87) International publication number:
**WO 2013/144328 (03.10.2013 Gazette 2013/40)**

(54) **MULTIMODAL POLYMER**

MULTIMODALES POLYMER

POLYMÈRE MULTIMODAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2012 EP 12161863**

(43) Date of publication of application:
**04.02.2015 Bulletin 2015/06**

(73) Proprietor: **Borealis AG**
**1220 Vienna (AT)**

(72) Inventors:
• **NOOPILA, Tuomas**
**FI-00250 Helsinki (FI)**
• **SENOL, Ilke**
**FI-02230 Espoo (FI)**
• **KHEIRANDISH, Saeid**
**D-41468 Neuss (AT)**
• **TYNYS, Antti**
**A-4020 Linz (AT)**
• **BURYAK, Andrey**
**4020 Linz (AT)**
• **PALMLÖF, Magnus**
**42671 Västra Frölunda (SE)**
• **ERIKSSON, Erik**
**44491 Stenungsund (SE)**
• **RÄTZSCH, Thomas**
**AT-4203 Altenberg (AT)**

(74) Representative: **Campbell, Neil Boyd**
**Dehns**
**St Bride's House**
**10 Salisbury Square**
**London**
**EC4Y 8JD (GB)**

(56) References cited:
**EP-A1- 2 011 822          EP-A1- 2 130 860**
**EP-A1- 2 354 184          WO-A1-2009/077142**
**WO-A1-2012/069400          WO-A2-2007/022908**

**Description**

This invention concerns a multimodal polyethylene polymer which is suitable for use in moulding applications such as injection moulding, rotomoulding and blow moulding applications, in particular blow moulding applications, as well as a process for the manufacture thereof. In particular, the invention relates to a multistage process for the manufacture of a multimodal high density polyethylene, preferably trimodal high density polyethylene, having an amount of an ultra high molecular weight component to maximise rheological properties without appreciably increasing the molecular weight of the polymer.

The use of polyethylenes in the manufacture of moulded articles is well known. There are countless disclosures of all manner of polyethylenes for the manufacture of these valuable products.

It is desirable to improve a polymer's rheological properties in order to improve processability (i.e. decreasing melt pressure and/or melt temperature) during moulding, especially blow moulding. By increasing MFR, the melt pressure and melt temperature can decrease, but the increased MFR has a negative effect on the melt strength, which is needed to avoid parison break during blow moulding processes.

Consequently, there is an optimal balance between MFR and melt strength. Currently, Cr based polyethylene resins are widely used in blow moulding processes due to their better balance of rheological properties compared with similar bimodal Ziegler Natta resins. It has been a challenge to develop Ziegler Natta based polymer solutions, which have similar or improved processability to comparable Cr resins without sacrificing the properties of the blow moulded article.

The present inventors therefore sought to maximise the processability of a multimodal HDPE resin, in particular one made using Ziegler Natta catalysis. Such a new polymer must outperform conventional two component Ziegler Natta resins as they are not favoured over Cr based polymers. The present inventors have solved this problem by adding an amount of an ultra high Mw fraction. At a similar MFR value as the corresponding bimodal polymer therefore, the polymer of the invention incorporating the additional ultra high molecular weight component, has improved processability. This can be seen in terms of lower $F_{max}/\lambda_I$ ratio (maximum force from rheotens measurement/first moment of the relaxation spectrum) compared with a bimodal counterpart.

By adding a small amount (< 12 wt-%) of a third (U)HMW fraction into a bimodal polyethylene, the Mw/Mn (measured by GPC) is not significantly broadened. However, the effect is seen in rheological behaviour, especially in SHI (shear thinning index) and PI (polydispersity index). The present inventors sought to improve processability of bimodal HDPE blow moulding resins by adding a small amount of (up to 15 wt%) of a third (U)HMW fraction into a bimodal polyethylene resin. Surprisingly it was found that in the case of trimodal polymer design obtained by adding an UHMW polymer fraction an excellent balance between MFR and melt strength, i.e. lower $F_{max}/\lambda_I$ ratio (maximum force from rheotens measurement/ first moment of the relaxation spectrum) compared with a bimodal counterpart, was obtained. Additionally, the trimodal polymer design enhanced markedly the die swell of the polymer, which is advantageous as it allows the melt to be placed into complex shaped parisons.

The inventors have surprisingly found that compared with a bimodal resin with comparable MFR value, the three component polymers of the invention show improved processability.

The prior art in this field does not appreciate the advantages of the invention. In particular, in the prior art it is not reported that a lower $F_{max}/\lambda_I$ ratio in moulding processes can be achieved with the polymer design of the invention.

Trimodal polymers are known. EP-A-1655334 describes a trimodal polymer with ultrahigh Mw fraction for use in the manufacture of pipes and cables. In this reference, the ultra high Mw component is a homopolymer of ethylene produced in prepolymerisation. A similar disclosure can be found in EP-A-1712574 where a small prepolymerisation polymer may be present alongside a bimodal polyethylene. The present invention teaches the formation of the ultra high molecular weight component in the last step of the manufacturing process and not as a prepolymer. The purpose of the prepolymerisation step is to prepare the catalyst for successful use in the main polymerisation stage. Any prepolymer formed is often of poor quality. Also, the prepolymer does not have the necessary ultra high Mw.

There are disclosures of three component blends where a bimodal polymer is mixed with a third component. In many of these cases there is no minor component and where blending occurs there is always the risk of inhomogeneity leading to gels or white spots. US 2006/0178482 describe blends of bimodal and unimodal polymer but these are not formed in a single process. The same applies to WO96/18677 where bimodal/unimodal polymer blends are made.

EP-A-2011822 describes a very complex polymer composition comprising numerous components formed in multiple polymerisation stages. These polymers do not appear to be high density.

WO2009/003627 describes trimodal polymers comprising a high amount of the third component. These polymers are made in a three stage process and are high density but there is a minimum of 18 wt% of the third component.

There remains therefore the need for a multimodal high density ethylene copolymer composition that can provide advantageous processing properties without loss of mechanical properties to therefore enable better polymer processing in moulding applications.

Surprisingly the inventors have found that in order to improve processability of a moulding resin, the ratio of $\lambda_I$

(representing the high molecular weight tail) and $F_{max}$ (representing the melt strength) has to be optimised. The inventors demonstrate that you need a higher $\lambda_I$ which represents the high molecular weight tail, leading to processability. At the same time you want to keep $F_{max}$ under a certain limit, as enough internal force is needed for the melt not to hang during moulding, but also not too high a force which would hinder moulding. By keeping the value of $F_{max} / \lambda_I$ in a given range, the inventors achieve a balance between ease of processing and parison stability.

**Summary of Invention**

Thus viewed from a first aspect the invention provides a process for the preparation of a multimodal ethylene copolymer comprising:

(I) polymerising ethylene in a first stage in the presence of a catalyst so as to form a first component having an MFR2 of 100 g/lOmin or more which forms 30 to 60 wt % of said ethylene copolymer; (II) polymerising ethylene and at least one C3-20 alpha olefin comonomer in a second stage in the presence of the same catalyst so as to form a second component forming 30 to 60 wt% of said ethylene copolymer wherein the MFR5 of the combination of components (I) and (II) is 0.1 to 15 g/lOmin; and (III) polymerising ethylene and at least one C3-20 alpha olefin comonomer in a third stage in the presence of the same catalyst so as to form a third component forming 0.5 to 12 wt% of said ethylene copolymer; wherein said multimodal ethylene copolymer has a density of at least 954 kg/ m' when measured according to ISO 1183/ 1872-2B; and having an MFR5 in the range of 0.01 to 10g/10min, when measured according to ISO 1133 at 190 °C under 5 kg load; and a FmaxA.i ratio of less than 60 cN/s; wherein the MFR2 (when measured according to ISO 1133 at 190 °C under 2.16 kg load) and the MFR5 of component (I) is higher than that of component (II), wherein the Mw of component (III) is higher than that of the other two components, wherein the MFR5 of component (II) is higher than that of component (III), and wherein the Mw/Mn of the multimodal ethylene copolymer is 10 to 20. Viewed from another aspect the invention provides a multimodal ethylene copolymer with a density of at least 954 kg/m' when measured according to ISO 1183/ 1872-2B; and having an MFR5 in the range of 0.01 to 10 g/10min, when measured according to ISO 1133 at 190 °C under 5 kg load; and a FinaxA.i ratio of less than 60 cN/s; said ethylene copolymer comprising at least three components (I) an ethylene homopolymer component having an MFR2 of 100 g/lOmin or more forming 30 to 60 wt% of said ethylene copolymer; (II) an ethylene and at least one C3-20 alpha olefin comonomer second component forming 30 to 60 wt% of said ethylene copolymer wherein the MFR5 of the combination of components (I) and (11) is 0.1 to 15 g/lOmin; and (III) an ethylene and at least one C3-20 alpha olefin comonomer third component forming 0.5 to 12 wt% of said ethylene copolymer; wherein the MFR2 (when measured according to ISO 1133 at 190 °C under 2.16 kg load) and the MFR5 of component (I) is higher than that of component (II), wherein the Mw of component (III) is higher than that of the other two components, wherein the MFR5 of component (II) is higher than that of component (III), and wherein the Mw/Mn of the multimodal ethylene copolymer is 10 to 20.

**Detailed Description of the Invention**

The present invention relates to a process for the manufacture of a multimodal ethylene copolymer composition involving at least 3 stages, preferably arranged in series, as well as the polymers made by that process. As the polymers of the invention are preferably made in this multistep process, as opposed to by mechanical blending, it is anticipated that the homogeneity of the produced materials is improved. The polymers of the invention are preferably made therefore in a multistage process. They should not be mechanical blends.

It will be appreciated that components (I) to (III) cannot be the same. If all components where the same then the polymer would not be multimodal as required by the invention. Moreover, it would not possess the $F_{max}/\lambda_I$ ratio of less than 60 cN/s as required by the invention.

As noted below, it is preferred if in components of the invention, the Mw of component (I) is lower than that of component (II) and the Mw of component (II) is lower than that of component (III). Alternatively viewed therefore, as MFR and Mw are linked, the $MFR_2$, $MFR_5$ and/or $MFR_{21}$ of component (I) is higher than that of component (II) and the $MFR_2$, $MFR_5$ and/or $MFR_{21}$ of component (II) is higher than that of component (III) respectively. This can be observed as the MFR of the polymer of the invention reduces as each additional component (II) then (III) is added.

Mw refers to weight average molecular weight. Mw refers to weight average molecular weight. The Mw of the ultra high Mw component is higher than that of the second component.

**Multimodal Ethylene Copolymer**

The process of the invention enables the formation of a multimodal ethylene copolymer. By ethylene polymer is meant a polymer in which ethylene is the major repeating unit. At least 50 wt%, such as at least 70 wt%, more preferably at least 90 wt% of the monomer units in the polymer derives from ethylene.

As noted above, the polymer of the invention is preferably prepared in a three step process and ideally comprises at least three components. It will be appreciated however that as the third component forms a minor percentage of the overall polymer, directly detecting the presence of that fraction, e.g. via GPC curves may be difficult. The present inventors suggest that its presence can however be shown via the processability of the multimodal ethylene copolymers of the invention.

The third component, made in the third step of the process of the invention, is preferably a copolymer. More preferably, this component is an ultra high molecular weight component, possessing a Mw (weight average molecular weight) much higher than the Mw values of the other two components. It may therefore have a Mw of 1,000 kg/mol or more.

Preferably, two components of the multimodal ethylene copolymer of the invention are copolymers. In some embodiments all three components can be copolymers. Ideally one component, preferably the first component, is a polyethylene homopolymer. By ethylene homopolymer is meant a polymer which is formed essentially only from ethylene monomer units, i.e. is 99.9 wt ethylene or more. It will be appreciated that minor traces of other monomers may be present due to industrial ethylene containing trace amounts of other monomers.

The multimodal ethylene copolymer of the invention therefore comprises at least one comonomer, e.g. $C_{3-20}$ alpha-olefin. Preferred comonomers are alphaolefins with 3-8 carbon atoms.

Preferably, the comonomer is selected from the group consisting of propene, 1-butene, 1-hexene, 4-methyl-1-pentene and 1-octene. It is possible for each component of the polymer to comprise the same or different comonomers. Preferably the same comonomer is used in all copolymeric components.

The polymers of the invention can comprise one comonomer or two comonomers or more than 2 comonomers. The use of a single comonomer is however preferred. It is possible for some components of the polymer to be binary copolymers whilst others are terpolymers. Highly preferred comonomers are 1-butene, 1-hexene and 1-octene or mixtures thereof. The use of 1-butene is especially preferred.

In a most preferred embodiment, the ethylene copolymer of the invention comprises one homopolymer component and two copolymer components. The comonomer employed is preferably 1-butene only.

Viewed from another aspect therefore the invention provides a process for the preparation of a multimodal ethylene copolymer comprising:

(I) polymerising ethylene in a first stage in the presence of a catalyst so as to form a first component forming 30 to 60 wt% of said ethylene copolymer;

(II) polymerising ethylene and at least one C3-8 alpha olefin comonomer in a second stage in the presence of the same catalyst so as to form a second component forming 30 to 60 wt% of said ethylene copolymer; and

(III) polymerising ethylene and at least one C3-8 alpha olefin comonomer in a third stage in the presence of the same catalyst so as to form a third component forming 0.5 to 12 wt% of said ethylene copolymer;

wherein said multimodal ethylene copolymer has a density of at least 940 kg/m$^3$, an MFR$_5$ in the range of 0.01 to 20 g/10min and a $F_{max}/\lambda_l$ ratio of less than 60 cN/s.

Component (I) of the polymer may form the largest or second largest component present. Preferably there is 40 to 60 wt% of component (I), especially 40 to 55 wt% of component (I).

Component (II) of the polymer preferably forms the largest or second largest component present. Preferably there is 40 to 55 wt% of component (II), especially 45 to 55 wt% of component (II).

Component (III) of the polymer preferably forms the smallest component present. Preferably there is 0.5 to 12 wt% of component (III), especially 1 to 12 wt% of component (III).

The amount of comonomer in the polymer of the invention is preferably 0.05-1 wt%, more preferably 0.1-0.6 wt%.

The ethylene copolymer of the present invention has a density of at least 940 kg/m$^3$, preferably at least 945 kg/m$^3$, more preferably at least 950 kg/m$^3$, even more preferably at least 954 kg/m$^3$. Ideally the polymer will have a density of no more than 980 kg/m$^3$, e.g. no more than 970 kg/m$^3$, such as no more than 965 kg/m$^3$. A highly preferred range is 954 to 965 kg/m$^3$.

The ethylene copolymer of the invention preferably has an MFR$_5$ of 0.01 to 10 g/10min, such as 0.05 to 5 g/10min, especially 0.1 to 4 g/10min.

The MFR$_{21}$ of the copolymer of the invention is preferably 1 to 30 g/10min.

MFR$_2$ values may range from 0.001 to 5 g/10 min. Ideally the MFR$_2$ value is less than 1 g/10min.

The MFR is an indication of the flowability, and hence the processability, of the polymer. The higher the melt flow rate, the lower the viscosity of the polymer and hence easier its processability. The MFR$_2$, MFR$_5$ or MFR$_{21}$ of the copolymer of the invention is preferably less than the MFR$_2$, MFR$_5$ or MFR$_{21}$ of components (I) and (II) combined respectively.

FRR$_{21/5}$ values (i.e. the ratio of MFR$_{21}$/MFR$_5$) may be in the range of 10 to 50, preferably 20 to 45.

The ethylene copolymers of the invention preferably have a weight average molecular weight, M$_w$ of at least 80 kg/mol, preferably at least 100 kg/mol. Mw values are preferably less than 300 kg/mol, such as less than 250 kg/mol.

Number average molecular weight, $M_n$, values are preferably low, for example between 5 and 20 kg/mol, such as 5 to 12 kg/mol.

Mw/Mn values are also preferably narrow for a trimodal material, e.g. 30 or less, 20 or less. The minimum value may be 10. A preferred range is 10 to 20. These values are measured by GPC.

The rheological behaviour of the polymers of the invention is particularly interesting. The presence of the third, preferably ultra high molecular weight component, modifies the rheology of the polymer relative to a bimodal polymer. The polymers of the invention have improved rheology leading to better processability without any detrimental effects on other polymer properties.

The shear thinning index (SHI) of the polymers is also important. The SHI is the ratio of the complex viscosity($\eta^*$) at two different shear stresses and is a measure of the broadness (or narrowness) of the molecular weight distribution. According to the present invention the ethylene polymer has a shear thinning index $SHI_{5/300}$, i.e. a ratio of the complex viscosity at 190°C and a shear stress of 5 kPa ($\eta^*_5$) and the complex viscosity at 190°C and a shear stress of 300 kPa ($\eta^*_{300}$), of more than 80, preferably more than 85, such as in the range of 90 to 150, more preferably in the range of 90 to 140.

The melting point Tm of the polymers may be in the range 130 to 140°C.

One of the main features of the invention is the presence of a third component formed after the formation of an initial bimodal polyethylene in the final polymerisation step. This component is preferably one possessing an ultra high molecular weight. The Mw of this component may therefore be at least 1.000 kg/mol. It will be appreciated however that measuring the Mw value directly is difficult as the third component is intimately mixed with the first two components of the process.

The presence of this component does however give rise to a high molecular weight tail in the formed polymer. This cannot, typically, be observed on the GPC curve. By incorporating this high molecular weight tail via the third component, the polymers of the invention are capable of being processed at high speeds. As we note above, this is achieved without significantly changing the Mw of the polymer.

The polymers of the invention have a low $F_{max}/\lambda_I$ ratio (maximum force from rheotens measurement/first moment of the relaxation spectrum). $F_{max}/\lambda_I$ ratio of 60 cN/s or less, preferably 55 cN/s or less can be achieved. Preferably the $F_{max}/\lambda_I$ ratio is in the range of 20 to 58, as in the range of 30 to 55.

The $\lambda_I$ value of the polymers of the invention may be > 0.5 s.

Die swell values of the polymers of the invention may be at least 1.9 (measured at 28.8 applied shear rate).

Thus, the first moment of the relaxation spectrum of the multimodal polymers of the invention is longer than the first moment of the relaxation spectrum of the corresponding bimodal polymer. First moments of the relaxation spectrum of longer than 0.5 s are achievable.

$F_{max}$ is essentially a measure of melt strength. The melt strengths observed in the present case are evidence therefore of good processability. Most importantly, however it is the ratio of $F_{max}$ to first moment of the relaxation spectrum which is important. The present inventors have achieved a good balance between melt strengths in terms of $F_{max}$ and the first moment of the relaxation spectrum $\lambda_I$.

A high Fmax represents the presence of a high molecular weight tail, leading to improved processability. However, Fmax is preferably kept below a certain limit to provide enough melt viscosity. Melt viscosity is essential during moulding but too much viscosity hinders moulding.

By keeping the value of $F_{max}/\lambda_I$ in the given range we achieve a balance between ease of processing and stability. An optimal balance of ease of processing and bubble stability is achieved if $F_{max}/\lambda_I$ is low, preferably 30 to 55 cN/s.

The ethylene copolymer of the invention can be formed in three separate polymerisation steps and it therefore comprises at least three components. Preferably, these are formed all together in a multistage process.

The polymer of the invention is multimodal. The term "multimodal" means herein, unless otherwise stated, multimodality with respect to molecular weight distribution. Usually, a polyethylene composition, comprising at least two polyethylene fractions, which have been produced under different polymerization conditions resulting in different (weight average) molecular weights and molecular weight distributions for the fractions, is referred to as "multimodal". The prefix "multi" relates to the number of distinguishable polymer fractions present in the polymer. The prefix "multi" can be used herein to refer to two or three or more than three distinguishable components in the polymer. The form of the molecular weight distribution curve, i.e. the appearance of the graph of the polymer weight fraction as a function of its molecular weight, of a multimodal polymer will often show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

As the ethylene copolymer of the invention comprises at least three components, ideally, the polymer of the invention is trimodal.

It will be appreciated that measuring the individual properties of the components of the blend may be difficult, in particular if the blend is made in a multistage process. Where a component, e.g. the higher molecular weight component, is made as a second step in a multistage polymerisation, for example, it is not possible to measure its properties directly. However, the density, $MFR_2$ of the component, e.g. HMW component, made in the subsequent step can be calculated using Kim McAuley's equations. Thus, both density and $MFR_2$ can be found using K. K. McAuley and J. F. McGregor: On-line Inference of Polymer Properties in an Industrial Polyethylene Reactor, AIChE Journal, June 1991, Vol. 37, No, 6, pages 825-835. The density is calculated from McAuley's equation 37, where final density and density after the first reactor is known. $MFR_2$ is calculated from McAuley's equation 25, where final $MFR_2$ and $MFR_2$ after the first reactor is known. These principles can also be applied to the third component and so on.

If however, a component is individually blended into the polymer, its properties can of course be determined.

The multimodal polymer usable in the present invention comprises a first component, typically a lower weight average molecular weight (LMW) component, and a second component, typically of higher weight average molecular weight (HMW) component (than the first component). The polymer also comprises at least a third component which is preferably an ultra high molecular weight component.

Preferably, at least one of said first and second components is a copolymer of ethylene with at least one comonomer. It is preferred that at least said second component is an ethylene copolymer. Alternatively, if one of said components is a homopolymer, then said first component is preferably the homopolymer. The ultra high molecular weight component is a preferably an ethylene copolymer.

Said first component of the multimodal ethylene copolymer preferably has a $MFR_2$ of at least 100 g/10 min, preferably below 500 g/10 min. The molecular weight of the first component should preferably range from 20,000 to 70,000, e.g. 25,000 to 50,000.

The density of the first component of said multimodal polymer may range from 940 to 980 kg/m$^3$, e.g. 950 to 970 kg/m$^3$.

The first component of said multimodal polymer may form from 30 to 60 wt%, e.g. 40 to 55 % by weight of the multimodal polymer.

The second component may form 30 to 60 wt%, e.g. 30 to 55 %, as 45 to 55 % by weight of the multimodal polymer.

The second component of said multimodal ethylene polymer preferably has a lower $MFR_2$ than the first component. The second component of said multimodal ethylene copolymer preferably has a lower $MFR_5$ or $MFR_{21}$ than the first component. The density of the second component of said multimodal polymer may range from 930 to 970 kg/m$^3$, e.g. 935 to 960 kg/m$^3$. The $M_w$ difference between the first and second components may be at least 50 kg/mol. The Mw of the second component may range from 80,000 to 500,000, preferably 100,000 to 300,000.

The $MFR_5$ of the combination of the first and second components may be 0.1 to 15 g/10min, such as 0.2 to 12 g/10min.

The third, preferably ultra high Mw component is a minor component and forms less than 15 wt% of the ethylene copolymer, preferably more than 1 wt%.

This component should not be a prepolymerisation component. Prepolymerisation polymers are formed when a catalyst is prepolymerised before a main polymerisation takes place. In some circumstances the prepolymer formed might contribute a few percent to the overall polymer composition. It is important in the present invention that the prepolymerisation component, should there be one, is not the third component. The third component is preferably formed last in a multistage polymerisation.

The third component can have an Mw of more than 1,000 kg/mol. It may also have an $MFR_{21}$ of less than 0,5 g/10min, preferable less than 0,1 g/10min, more preferable less than 0,03 g/10min, such as less than 0,01 g/10min.

The ethylene copolymer of the invention is preferably produced using a multistage process, i.e. each component is made *in situ* (i.e. in the presence of another). A two stage polymerisation can be used to produce the first two components of the polymer with a third stage optionally being used to provide the ultra high Mw component. It is an alternative but less favoured option for the third component to be blended into the polymer. It is particularly preferred therefore that the first and second components of the invention are made *in situ.* This may therefore be a bimodal polyethylene. The art contains many disclosures on the manufacture of such bimodal polymers.

Ideally, however, all components are made in a multistage process and the invention provides a third *in situ* step.

The polymer of the invention can be prepared using any convention polymerisation catalyst such as a single site catalyst or a Ziegler Natta catalyst. Single site catalysts of interest include metallocene catalysts, in particular those based on so called constrained geometry metallocenes or metallocenes involves bis cyclopentadienyl ligands typically with Zr or Hf. These catalysts are well known and further description thereof is unnecessary.

The use of Ziegler Natta catalysts is preferred. These catalysts are well known and typically contain magnesium chloride, an aluminium compound and a titanium compound optionally supported on a particulate support.

Preferred catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, EP 810235 and WO 99/51646. The catalysts disclosed in WO 95/35323 are especially useful as they are well suited in production of both a polyethylene having a high molecular weight and a polyethylene having a low molecular weight. Thus, especially preferably the transition metal component comprises a titanium halide, a magnesium alkoxy alkyl compound and an aluminium alkyl dihalide supported on an inorganic oxide carrier.

In one embodiment a catalyst of Ziegler Natta type, wherein the active components are dispersed and solidified within Mg-based support by the emulsion/solidification method adapted to PE catalyst, e.g. as disclosed in WO03106510 of Borealis, e.g. according to the principles given in the claims thereof.

In another preferable embodiment, the catalyst is a non-silica supported catalyst, i.e. the active components are not supported to an external silica support. Preferably, the support material of the catalyst is a Mg-based support material. Examples of such preferred Ziegler-Natta catalysts are described in EP 0 810 235.

It is preferred if the same catalyst is used in each stage of the manufacture of the ethylene copolymer of the invention. It is thus preferred if the catalyst added in the first stage of the process is transferred to the second polymerisation stage and so on.

**Preparation of polymer**

For the preparation of the ethylene polymer of the present invention polymerisation methods well known to the skilled person may be used. The process of the invention primarily relates to the formation of a multimodal polymer by blending each of the components *in-situ* during the polymerisation process thereof (so called *in-situ* process). It is envisaged that blending mechanically two or more separately produced components in a manner known in the art could be employed.

The multimodal polyethylene useful in the present invention is preferably obtained by *in-situ* blending in a multistage polymerisation process. Accordingly, polymers are obtained by *in-situ* blending in a multistage, i.e. three or more stage, polymerization process including solution, slurry and gas phase process, in any order. Whilst it is possible to use different catalysts in each stage of the process, it is preferred if the catalyst employed is the same in all stages.

Ideally therefore, the polyethylene polymer of the invention is produced in at least three-stage polymerization using the same catalyst. Thus, for example three slurry reactors or three gas phase reactors, or any combinations thereof, in any order can be employed. Preferably however, the polyethylene is made using a slurry polymerization in a loop reactor followed by two gas phase polymerizations in a gas phase reactor. Thus, the first component is preferably formed in a loop reactor and the second and third components formed in a gas phase reactor.

A loop reactor - gas phase reactor system is well known as Borealis technology, i.e. as a BORSTAR™ reactor system. Such a multistage process is disclosed e.g. in EP-A-0517868.

The conditions used in such a process are well known. For slurry reactors, the reaction temperature will generally be in the range 60 to 110°C, e.g. 85-110°C, the reactor pressure will generally be in the range 5 to 80 bar, e.g. 50-65 bar, and the residence time will generally be in the range 0.3 to 5 hours, e.g. 0.5 to 2 hours. The diluent used will generally be an aliphatic hydrocarbon having a boiling point in the range -70 to +100°C, e.g. propane. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C, e.g. 70 to 110°C, the reactor pressure will generally be in the range 10 to 25 bar, and the residence time will generally be 1 to 8 hours. The gas used will commonly be a non-reactive gas such as nitrogen or low boiling point hydrocarbons such as propane together with monomer, e.g. ethylene.

A chain-transfer agent, preferably hydrogen, can be added as required to the reactors. It is preferred if the amount of hydrogen used in the manufacture of the first component is very low. Preferably therefore, the amount is less than 1, preferably less than 0.5, e.g. 0.05 to 0.5 mol of $H_2$/kmoles of ethylene are added to the first, e.g. loop reactor.

The amount of hydrogen added to the second reactor, typically gas phase reactor is also low. Values may range from 0.01 to 1, e.g. 0.05 to 0.5 moles of $H_2$/kmoles of ethylene.

Preferably, the first polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane. The reaction product is then transferred, preferably to a continuously operating gas phase reactor. The second component can then be formed in a gas phase reactor using preferably the same catalyst.

The third component can also be formed in the gas phase, preferably in the absence of any hydrogen. Typically, the same conditions of temperature and pressure can be used in reactors two and three of the process. The amount of comonomer added varies however. There is preferably much less comonomer added during the third step of the process, e.g. less than half that employed in the second step. In particular, the ratio of comonomer to ethylene might be 5 to 20 mol/kmol in step three of the process. In step two, higher amounts of comonomer may be employed, such as 20 to 40 mol/kmol ethylene.

A prepolymerisation step may precede the actual polymerisation process.

The ethylene partial pressure in the loop reactor is preferably between 10 and 15 mol%. In the gas phase, it is preferably above 50 mol%.

The ethylene copolymer of the invention can be blended with any other polymer of interest or used on its own as the only olefinic material in an article such as a moulded article. Thus, the ethylene copolymer of the invention can be blended with known HDPE, MDPE, LDPE, LLDPE polymers or a mixture of ethylene polymers of the invention could be used. Preferably the ethylene polymer comprises at least 50 % by weight of any polymer composition containing the ethylene polymer, preferably from 80 to 100 % by weight and more preferably from 85 to 100 % by weight, based on the total weight of the composition. Ideally however any article made from the ethylene polymer is the invention consists essentially of the polymer, i.e. contains the ethylene polymer along with standard polymer additives only.

Any blending may be conveniently effected in an extruder. Blends can be compounded and extruded to pellets by any extruder known in the art. It is preferred, however, to use a twin screw extruder. It may be of a co-rotating type, such as those produced by Werner & Pfleiderer having a designation ZSK. Alternatively, it may be of a counter-rotating type, such as those produced by Japan Steel Works, having a designation JSW CIM-P, e.g. CIM90P or LCM continuous mixer by Kobe Steel, such as LCM500H, or Farrel continuous mixer (FCM) by Farrel. It is especially preferred to use a counter-rotating twin screw extruder.

The extruder may contain one or more gear pumps and throttle valves. This equipment can be used to improve the homogeneity of the polymer composition or to increase the capacity of the extruder. Such a solution is disclosed, among others, by T. Fukui and R. Minato: "LCM Continuous Mixer/Gear Pump System for Polyolefin Resins", Society of Plastics Engineers Polyolefins VII International Conference, February 24-27, 1991, Wyndham Greenspoint Hotel, Houston, Texas.

Before the extrusion the polymer may be mixed with the desired additives, fillers and adjuvants as known in the art. Suitable antioxidants and stabilizers are, for instance, sterically hindered phenols, phosphates or phosphonites, sulphur containing antioxidants, alkyl radical scavengers, aromatic amines, hindered amine stabilizers and the blends containing compounds from two or more of the above-mentioned groups.

Examples of sterically hindered phenols are, among others, 2,6-di-tert-butyl - 4-methyl phenol (sold, e.g., by Degussa under a trade name of Ionol CP), pentaerythrityl-tetrakis(3-(3',5'-di-tert. butyl-4-hydroxyphenyl)-propionate (sold, e.g., by Ciba Specialty Chemicals under the trade name of Irganox 1010) octadecyl-3-3(3'5'-di-tert-butyl-4'-hydroxyphenyl)propionate (sold, e.g., by Ciba Specialty Chemicals under the trade name of Irganox 1076) and 2,5,7,8-tetramethyl-2(4',8',12'-trimethyltridecyl)chroman-6-ol (sold, e.g., by BASF under the trade name of Alpha-Tocopherol).

Examples of phosphates and phosphonites are tris (2,4-di-$t$-butylphenyl) phosphite (sold, e.g., by Ciba Specialty Chemicals under the trade name of Irgafos 168), tetrakis-(2,4-di-$t$-butylphenyl)-4,4'-biphenylen-di-phosphonite (sold, e.g., by Ciba Specialty Chemicals under the trade name of Irgafos P-EPQ) and tris-(nonylphenyl)phosphate (sold, e.g., by Dover Chemical under the trade name of Doverphos HiPure 4)

Examples of sulphur-containing antioxidants are dilaurylthiodipropionate (sold, e.g., by Ciba Specialty Chemicals under the trade name of Irganox PS 800), and distearylthiodipropionate (sold, e.g., by Chemtura under the trade name of Lowinox DSTDB).

Examples of nitrogen-containing antioxidants are 4,4'-bis(1,1'-dimethylbenzyl)diphenylamine (sold, e.g., by Chemtura under the trade name of Naugard 445), polymer of 2,2,4-trimethyl-1,2-dihydroquinoline (sold, e.g., by Chemtura under the trade name of Naugard EL-17), $p$-($p$-toluene-sulfonylamido)-diphenylamine (sold, e.g., by Chemtura under the trade name of Naugard SA) and $N,N'$-diphenyl-$p$-phenylene-diamine (sold, e.g., by Chemtura under the trade name of Naugard J).

Commercially available blends of antioxidants and process stabilizers are also available, such as Irganox B225, Irganox B215 and Irganox B561 marketed by Ciba-Specialty chemicals.

Suitable acid scavengers are, for instance, metal stearates, such as calcium stearate and zinc stearate. They are used in amounts generally known in the art, typically from 500 ppm to 10000 ppm and preferably from 500 to 5000 ppm.

## Applications

The polymer of the invention is preferably used in the manufacture of moulded articles, such as injection moulded and rotomoulded articles. The polymer of the invention is preferably a significant component of the articles of the invention, such as at least 50 wt% thereof.

Articles of particular interest include containers such as bottles.

Articles of the invention can possess excellent mechanical properties in terms of their tensile properties and impact strengths. In particular, we show in our examples that the tensile and impact properties of the polymers of the invention have the same values as bimodal equivalents. The improved rheological properties we observe are therefore achieved without any effect on mechanical properties.

In particular, the melt pressure of the inventive polymers can be lower than an equivalent bimodal polymer for the same melt temperature in the moulding process.

The invention will now be described with reference to the following non limiting examples and figures.

Figure 1 represents the Fmax/$\lambda_l$ ratio of different examples of the invention.

Figure 2 is a graph of Complex viscosity vs complex modulus of the examples of the invention and commercial reference.

Figure 3 is a graph of die swell as a function of apparent shear rate.

Figure 4 shows the melt pressure and melt temperature during blow moulding.

**Analytical tests**

Melt Flow Rate

The melt flow rate (MFR) is determined according to ISO 1133 and is indicated in g/10 min. The MFR is an indication of the melt viscosity of the polymer. The MFR is determined at 190°C for PE. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).

The quantity FRR (flow rate ratio) is an indication of molecular weight distribution and denotes the ratio of flow rates at different loads. Thus, $FRR_{21/2}$ denotes the value of $MFR_{21}/MFR_2$.

Density

Density of the polymer was measured according to ISO 1183 / 1872-2B.

For the purpose of this invention the density of the blend can be calculated from the densities of the components according to:

$$\rho_b = \sum_i w_i \cdot \rho_i$$

where $\rho_b$ is the density of the blend,
$w_i$ is the weight fraction of component "i" in the blend and
$\rho_i$ is the density of the component "i".

Molecular weight

$M_w$, $M_n$ and MWD are measured by Gel Permeation Chromatography (GPC) according to the following method:

The weight average molecular weight $M_w$ and the molecular weight distribution (MWD = $M_w/M_n$ wherein $M_n$ is the number average molecular weight and $M_w$ is the weight average molecular weight) is measured according to ISO 16014-4:2003 and ASTM D 6474-99. A Waters GPCV2000 instrument, equipped with refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 $\mu$L of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

As it is known in the art, the weight average molecular weight of a blend can be calculated if the molecular weights of its components are known according to:

$$Mw_b = \sum_i w_i \cdot Mw_i$$

where $Mw_b$ is the weight average molecular weight of the blend,
$w_i$ is the weight fraction of component "i" in the blend and
$Mw_i$ is the weight average molecular weight of the component "i".

The number average molecular weight can be calculated using the well-known mixing rule:

$$\frac{1}{Mn_b} = \sum_i \frac{w_i}{Mn_i}$$

where $Mn_b$ is the weight average molecular weight of the blend,
$w_i$ is the weight fraction of component "i" in the blend and
$Mn_i$ is the weight average molecular weight of the component "i".

Rheology

Rheological parameters such as Shear Thinning Index SHI and Viscosity are determined by using a rheometer, preferably a Anton Paar Physica MCR 501 Rheometer on compression moulded samples under nitrogen atmosphere at 190 °C using 25 mm diameter plates and plate and plate geometry with a 1.3 mm gap according to ASTM 1440-95. The oscillatory shear experiments were done within the linear viscosity range of strain at frequencies from 0.05 to 300 rad/s (ISO 6721-1). Five measurement points per decade were made. The method is described in detail in WO 00/22040.
The values of storage modulus (G'), loss modulus (G") complex modulus (G*) and complex viscosity ($\eta$*) were obtained as a function of frequency ($\omega$). $\eta_{100}$ is used as abbreviation for the complex viscosity at the frequency of 100 rad/s.

First moment of the relaxation spectrum- $\lambda_I$

The determination of the discrete relaxation time spectrum from the storage and loss modulus data (G', G" ($\omega$)) was done by the use of IRIS Rheo Hub 2008. The linear viscoelastic data (G', G" ($\omega$)) was obtained by frequency sweep measurements undertaken at 190°C, on a Anton Paar MCR 501 coupled with 25 mm parallel plates, applying a gap of 1.3 mm and a strain within linear viscoelastic regime. The underlying calculation principles used for the determination of the discrete relaxation spectrum are described elsewhere [1].
IRIS RheoHub 2008 expresses the relaxation time spectrum as a sum of N Maxwell modes

$$\overset{o}{G}(t) = G_e \cdot \sum_1^N g_i \cdot e^{-\frac{t}{\lambda_i}}$$

wherein $g_i$ and $\lambda_i$ are material parameters and $G_e$ is the equilibrium modulus. The choice for the maximum number of modes, $N$ used for determination of the discrete relaxation spectrum, was done by using the option "optimum" from IRIS RheoHub 2008. The equilibrium modulus $G_e$ was set at zero.
The so-called first moment of the relaxation spectrum $\lambda_I$ can be described according to reference [2] as:

$$\lambda_I = \frac{\eta_0}{G_N^0} \quad [s]$$

in which, $\eta_0$ are $G_N^0$ values are taken from the "Rheological Constants" table retrieved by IRIS RheoHub 2008, after calculation of the relaxation spectra, using the procedure described above.

References:

1. Baumgärtel M, Winter HH, "Determination of the discrete relaxation and retardation time spectra from dynamic mechanical data", Rheol Acta 28:511519 (1989).
2. Structure and Rheology of Molten Polymers, John Dealy & Ronald G. Larson, Hanser 2006, pp 119.

Shear thinning index (SHI), which correlates with MWD and is independent of $M_w$, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.).

SHI value is obtained by calculating the complex viscosities at given values of complex modulus and calculating the ratio of the two viscosities. For example, using the values of complex modulus of 2.7 kPa and 210 kPa, then $\eta^*_{2.7kPa}$ and $\eta^*_{210kPa}$ are obtained at a constant value of complex modulus of 2.7 kPa and 210 kPa, respectively. The shear thinning index $SHI_{2.7/210}$ is then defined as the ratio of the two viscosities $\eta^*_{2.7}$ and $\eta^*_{210}$, i.e. $\eta_{2.7}/\eta_{210}$.

It is not always practical to measure the complex viscosity at a low value of the frequency directly. The value can be extrapolated by conducting the measurements down to the frequency of 0.126 rad/s, drawing the plot of complex viscosity vs. frequency in a logarithmic scale, drawing a best-fitting line through the five points corresponding to the lowest values of frequency and reading the viscosity value from this line.

Rheotens tests for Fmax (maximal force)

The strain hardening behaviour is determined by the method as described in the article "Rheotens-Mastercurves and Drawability of Polymer Melts", M. H. Wagner, Polymer Engineering and Sience, Vol. 36, pages 925 to 935. The content of the document is included by reference. The strain hardening behaviour of polymers is analysed by Rheotens apparatus (product of Göttfert, Siemensstr.2, 74711 Buchen, Germany) in which a melt strand is elongated by drawing down with a defined acceleration. The haul-off force F in dependence of draw-down velocity v is recorded. The test procedure is performed in a standard climatized room with controlled room temperature of 23°C and 30 bar. The Rheotens apparatus (1) is combined with an extruder/melt pump (3) for continuous feeding of the melt strand (2). The extrusion temperature is 200 °C; a capillary die with a diameter of 2 mm and a length of 6 mm is used. The strength length between the capillary die and the Rheotens wheels is 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand (2) drawn down is 120 mm/sec2. The Rheotens was operated in combination with the PC program EXTENS. This is a real-time data-acquisition program, which displays and stores the measured data of tensile force and drawdown speed.

Comonomer Content (NMR):

The comonomer content was determined by using $^{13}$C -NMR. The $^{13}$C -NMR spectra were recorded on Bruker 400 MHz spectrometer at 130 °C from samples dissolved in 1,2,4-trichlorobenzene/benzene-d6 (90/10 w/w).

Differential Scanning Calorimeter (DSC)

The Melting Temperature ($T_m$) and the Crystallization Temperature ($T_{cr}$) were measured with Mettler TA820 differential scanning calorimeter (DSC) on $3\pm0.5$ mg samples. Both crystallization and melting curves were obtained during 10°C/min cooling and heating scans between -10 - 200°C. Melting and crystallization temperatures were taken as the peaks of endotherms and exotherms, respectively.

Production of bottles:

For the production of 1 liter round bottles a "Fischer Müller" Blow Molding Machine was used. The main processing parameters for the production are as follows:

- Temperature profile: 180 to 200°C applied in extruder, adapter and head
- Melt temperature measured: 190 to 200°C
- Speed of extruder (revolution per minute; rpm): 13 to 16 rpm
- Die gap: the die gap was adjusted to get a bottle with a weight of 40 g with Borealis grade RB307MO (random propylene copolymer with a density of 902 kg/m$^3$ and a MFR$_2$ of 1.5 g/10min)
- Cycle time: 12 to 16 seconds

Drop test on bottles (progressive)

During the progressive drop test each container is dropped several times in a row from increasing heights. The test is stopped for each container when fracture occurs. The drop test is performed on extrusion blow moulded 1 1 bottles, having an outer diameter of 90 mm, a wall thickness of 0.6 mm, an overall-height of 204 mm and a height of the cylindrical mantle of 185 mm. The bottles are filled up to their shoulder with water. For each test series at least 12 containers are required. 4 containers are dropped simultaneously from a starting height which is chosen according to the following table, where the expected fracture drop height has been determined in pretests or has been chosen from experience:

| Expected fracture drop height [m] | 0.3 - 1.0 | 1.0 - 2.5 | 2.5 - 5.0 |
|---|---|---|---|
| Starting drop height [m] | 0.2 | 0.5 | 2.0 |

Those bottles that show fracture are discarded and the test is continued with the remaining bottles at increasing heights. The size of the steps by which the height is increased depends on the starting height. Below a starting height of 0.5 m the step size is 0.1 m while equal to or above 0.5 m the step size is 0.25 m. The fracture drop height is noted for each bottle and from the single values the average fracture drop height is calculated according to the following formula:

$$h_p = \sum (h_i)/ n_g$$

wherein

$h_p$ = average fracture drop height
$h_i$ = individual fracture drop height
$n_g$ = total number of dropped containers

Tensile test on bottles

The top and bottom of the bottles are cut off. 12 specimen according to ISO527/1B are punched along the remaining cylinder. Tensile modulus, tensile stress and tensile strain are then determined according to ISO 527-2, applying a traction speed of 1 mm/min for the modulus and 100 mm/min for yield strength.

Tensile impact strength

The top and bottom of the bottles are cut off. 12 unnoched specimen type 3 according to ISO 8256:1990 are punched along the remaining cylinder. Tensile impact strength is then determined according to ISO 8256/A3.

Swell ratio (Die Swell)

The die swell was determined using a Triple Bore Capillary Rheometer, Rheograph 6000 (Göttfert GmbH, Germany), coupled with a high resolution laser detection device. The diameter detector was a Zumbach Odac 30J (emitter/receiver system), Laser type: laser diode VLD 0.9 mW and Laser class 2, wavelength: 630-680 nm, P: <1mW
The following test conditions were employed:
The experiments were performed at 210°C +/- 1°C. The sample was preheated for 10 mins.

Test piston: 11.99 mm (diameter)
Test barrel: 12 mm (diameter)
Round hole die length/diameter/run in angle: 30mm/2mm/180°
Pressure transducer: 500bar +/-2.5
Distance die exit / laser beam: 20mm +/-1
Distance die exit / pneumatic cut device: 65mm +/-1
Apparent shear rates 28.8 s$^{-1}$

Conditions for measure point take over at the viscosity measurement and swell determination:

Pressure stability: comparison time: 7s; take over tolerance: 5%
Number of measurements for each apparent shear rate: 2

Test Procedure:

Before start of the measurement cut the extrudate with the pneumatic cut device (extrudate length 65mm). First step is a viscosity measurement beginning with the lowest apparent shear rate. After the take over of the measure point, immediately the swelling determination begins with the same apparent shear rate as was used for the viscosity measurement. At this point, the piston stops. All steps are repeated for each apparent shear rate.

Evaluation:

The reported Swell ratio (Dynamic die swell) is the average of two measurements at test temperature.
The swell ratio is determined as the ratio between the strand diameter and the die diameter, as follows:

$$dds = \frac{dstrand^2}{ddie^2}$$

The method complies with ASTM D 3835 - 02 "Standard Test Method for Determination of Properties of Polymeric Materials by Means of a Capillary Rheometer"

**Example 1: Complex preparation:**

87 kg of toluene was added into the reactor. Then 45.5 kg Bomag A in heptane was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

**Solid catalyst component preparation:**

275 kg silica (ES747JR of Crossfield, having average particle size of 20 microns) activated at 600°C in nitrogen was charged into a catalyst preparation reactor. Then, 411 kg 20 % EADC (2.0 mmol/g silica) diluted in 555 litres pentane was added into the reactor at ambient temperature during one hour. The temperature was then increased to 35°C while stirring the treated silica for one hour. The silica was dried at 50°C for 8.5 hours. Then 655 kg of the complex prepared as described above (2 mmol Mg/g silica) was added at 23°C during ten minutes. 86 kg pentane was added into the reactor at 22 DEG C during ten minutes. The slurry was stirred for 8 hours at 50 DEG C. Finally, 52 kg TiCl$_4$ was added during 0.5 hours at 45°C. The slurry was stirred at 40°C for five hours. The catalyst was then dried by purging with nitrogen.

**Polymerisation Example 1**

HDPE polymers were prepared with the catalyst described above. Trimodal HDPE lots were produced in a reactor train consisting of prepolymeriser, loop, GPR1 and GPR2, and bimodal reference target was produced without GPR2. The operating conditions are summarised below.
The prepolymerisation was of conventional operation of mud feed system with dry catalyst and provides around 2 wt% of the overall polymer.
The loop reactor provides an ethylene homopolymer with a target MFR$_2$ of 300 g/10 min. The MFR adjustment is done by adding Hydrogen as known. This component is typically 40 to 53 wt% of the polymer.
GPR1 provides a high HMW copolymer component with C$_4$ as a comonomer. It provides around 40 to 50 % of the overall polymer.
GPR2 is the UHMW copolymer (C$_4$ as a comonomer), and is produced in the absence of hydrogen. It provides around 1 to 5 wt% of the polymer. The process conditions and final polymer properties are summarised in Table 1.

*Table 1.*

| Lot | CE1 | E1 | CE2 | E2 |
|---|---|---|---|---|
| target | Bimodal | Trimodal | Bimodal | Trimodal |
| A1-PREPOLY | | | | |

(continued)

| Lot | | CE1 | E1 | CE2 | E2 |
|---|---|---|---|---|---|
| target | | Bimodal | Trimodal | Bimodal | Trimodal |
| split | wt-% | 2,6 | 2,5 | 2,6 | 2,5 |
| **A2 - LOOP** | | | | | |
| H2/C2 | mol/kmol | 481,0 | 424,9 | 481,9 | 361,0 |
| split | wt-% | 48,1 | 41,6 | 47,3 | 46,7 |
| A2 MFR2 | dg/min | 424 | 281 | 320 | 210 |
| **A3 - GPR1** | | | | | |
| H2/C2 | mol/kmol | 34,3 | 124,3 | 89,7 | 243,4 |
| C4/C2 | mol/kmol | 7,9 | 8,8 | 8,2 | 10,0 |
| split | wt-% | 49,3 | 44,2 | 50,1 | 49,8 |
| A3 MFR2 | dg/min | | | 0,4 | 3,4 |
| A3 MFR5 | dg/min | 0,5 | 2,6 | 1,4 | 11,0 |
| A3 density | kg/m$^3$ | 958,7 | 959,9 | 959,9 | 961,2 |
| **B3 - GPR2** | | | | | |
| H2/C2 | mol/kmol | | 0,0 | | 0,0 |
| C4/C2 | mol/kmol | | 20,2 | | 28,9 |
| estim. split | wt-% | | 11,8 | | 1,0 |
| **FINAL PROPERTIES** | Pellets | | | | |
| Final MFR2 | dg/min | | | 0,4 | 0,4 |
| Final MFR5 | dg/min | 0,4 | 0,4 | 1,4 | 2,0 |
| Final MFR21 | dg/min | 9,5 | 9,9 | 29,0 | |
| FRR21 / 5 | | 24,4 | 23,6 | 20,7 | |
| Final Density | kg/m$^3$ | 959,0 | 958,3 | 960,4 | 960,7 |

Polymer properties:

The characterisation results of the evaluated lots and a commercial reference grade BS2581 (=CE3) are summarised in Table 2.

*Table 2.*

| | | CE1 | E1 | CE2 | E2 | CE3 |
|---|---|---|---|---|---|---|
| | | bimodal | trimodal | bimodal | trimodal | bimodal |
| **Density** | kg/m$^3$ | 959.0 | 958.3 | 960.4 | 960.7 | 958.8 |
| **MFR2** | g/10 min | 0.09 | 0.09 | 0.37 | 0.41 | 0.29 |
| **MFR5** | g/10 min | 0.39 | 0.42 | 1.4 | 2 | 1.22 |
| **MFR21** | g/10 min | 9.5 | 9.9 | 29 | | 28.52 |
| **FRR 21/5** | | 24.1 | 23.6 | 20.7 | | 23.4 |
| **FRR 5/2** | | 4.3 | 4.7 | 3.8 | 4.9 | 4.2 |
| **FRR 21/2** | | 105.6 | 110.0 | 78.4 | | 98.3 |
| $M_n$ | kg/mol | 9 | 11 | 9 | 9 | |
| $M_w$ | kg/mol | 165 | 157 | 118 | 120 | 184 |
| **MWD** | | 19.2 | 14.6 | 13.7 | 13.8 | |

(continued)

|  |  | CE1 | E1 | CE2 | E2 | CE3 |
|---|---|---|---|---|---|---|
|  |  | bimodal | trimodal | bimodal | trimodal | bimodal |
| $T_m$ | °C | 132.8 | 133 | 132.6 | 134.4 |  |
| $T_c$ | °C | 119.4 | 119.6 | 119.6 | 119.2 |  |
| SHI (0/100 rad/s) |  | 25.5 | 127 | 13.8 | 1200 | 54.4 |
| SHI (5/300 rad/s) |  | 66 | 104 | 41 | 98 | 66.5 |
| Dynamic die swell (28.8 1/s) |  | 1.51 | 1.93 | 1.82 | 2.59 | 1.65 |
| Melt strength Fmax (rheotens) | cN | 29.7 | 39.6 | 16.9 | 18.2 | 21.9 |
| - $\lambda_I$ | s | 0.45 | 0.744 | 0.0883 | 0.51 |  |
| Fmax/$\lambda_I$ | cN/s | 66 | 53 | 191 | 36 |  |

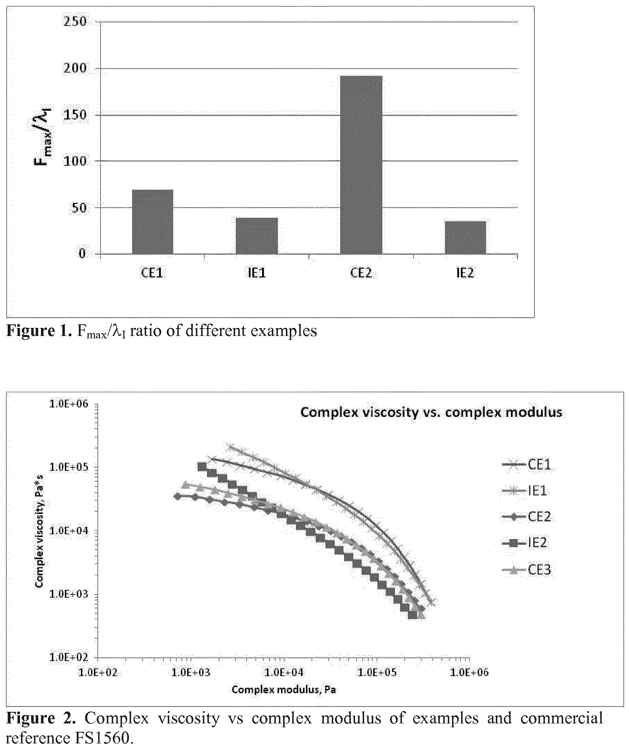

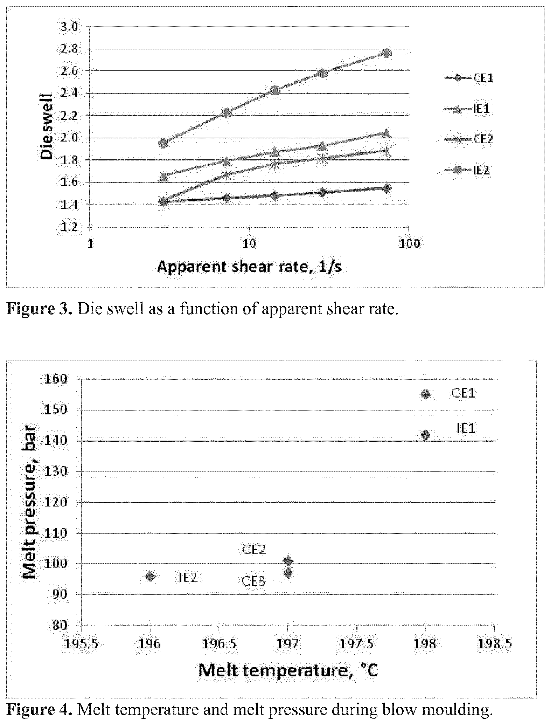

$F_{max}/\lambda_I$ ratio is illustrated in Figure 1, complex viscosity vs complex modulus is shown in Figure 2 and die swell as a function of apparent shear rate in Figure 3. Figure 1 shows a marked difference between bimodal and trimodal lots in terms of $F_{max}/\lambda_I$ ratio. Figure 2 shows more pronounced shear thinning behaviour of IE1 and IE2 compared similar bimodal references. Figure 3 shows more pronounced die swell behaviour of the IEs compared with CE1 and CE2.

Blow moulding of bottles and bottle properties

In order to evaluate the effect of trimodal polymer design on the processability, 1L bottles were blow moulded as described above. The processability and the final bottle properties of the evaluated lots are summarised in Table 3. Figure 4 illustrates the melt temperature and melt pressure during blow moulding.

**Table 3.** Processability of bottles properties of the evaluated material

|  |  | CE1 | IE1 | CE2 | IE2 | CE3 |
|---|---|---|---|---|---|---|
|  | Melt pressure (bar) | 155 | 142 | 101 | 96 | 97 |
|  | Melt temperature (°C) | 198 | 198 | 197 | 196 | 197 |
|  | Drop height -20°C, m | 3.88 | 2.8 | 4.68 | 4.15 | 4.05 |
|  | Top load max, N | 370 | 468 | 472 | 405 | 469 |
| MD | Tensile modulus (MPa) | 980 | 1056 | 1089 | 1034 | 1068 |
|  | Tensile stress at yield (MPa) | 25.2 | 26 | 27 | 26.1 | 24.6 |
|  | Tensile strain at break (%) | 10.4 | 13.8 | 10.9 | 11.8 | 8.9 |
| TD | Tensile modulus (MPa) | 889 | 881 | 947 | 950 | 928 |
|  | Tensile stress at yield (MPa) | 24.5 | 24.2 | 25.8 | 25.6 | 25.2 |
|  | Tensile strain at break (%) | 12 | 11.3 | 11.6 | 11.4 | 11 |
| MD | Tensile impact strength (kJ/m2) | 171 | 147 | 101 | 74 | 88 |
| TD | Tensile impact strength (kJ/m2) | 276 | 199 | 133 | 83 | 131 |

As can be seen in Figure 4 and Table 3, IE1 and IE2 show improved processabilty in terms of melt pressure during blow moulding. IE1 shows ~10% lower melt pressure compared with similar reference CE1 (same melt temperature). IE2 shows ~5% lower melt pressure and 1 °C lower melt temperature than comparable bimodal pilot reference CE2. Table 3 shows that that improved processability of IEs is achieved and without deteriorating the final bottle properties.

The examples show that by balancing polymer rheological properties by trimodal polymer design, i.e. keeping the value of $F_{max} / \lambda_I$ in the preferred range of the invention, an improvement of polymer resin processability during blow moulding is achieved. The improved processability is achieved without deteriorating the final bottle properties.

**Claims**

1. A multimodal ethylene copolymer with a density of at least 954 kg/m$^3$ when measured according to ISO 1183 / 1872-2B; and having an MFR$_5$ in the range of 0.01 to 10 g/10min, when measured according to ISO 1133 at 190 °C under 5 kg load; and a F$_{max}$/λ$_l$ ratio of less than 60 cN/s; said ethylene copolymer comprising at least three components

   (I) an ethylene homopolymer component **having an MFR$_2$ of 100 g/10min** or more forming 30 to 60 wt% of said ethylene copolymer;
   (II) an ethylene and at least one C3-20 alpha olefin comonomer second component forming 30 to 60 wt% of said ethylene copolymer wherein the MFR$_5$ of the combination of components (I) and (II) is 0.1 to 15 g/10min; and
   (III) an ethylene and at least one C3-20 alpha olefin comonomer third component forming 0.5 to 12 wt% of said ethylene copolymer;

   wherein the MFR$_2$ (when measured according to ISO 1133 at 190 °C under 2.16 kg load) and the MFR$_5$ of component (I) is higher than that of component (II), wherein the Mw of component (III) is higher than that of the other two components, wherein the MFR$_5$ of component (II) is higher than that of component (III), and wherein the Mw/Mn of the multimodal ethylene copolymer is 10 to 20.

2. A copolymer as claimed in claim 1 having an MFR$_5$ of 0.1 to 4 g/10min.

3. A copolymer as claimed in any preceding claim wherein the components (I) to (III) are blended in situ.

4. A copolymer as claimed in any preceding claim having a density 954 to 965 kg/m$^3$.

5. A copolymer as claimed in any preceding claim prepared using a Ziegler Natta catalyst.

6. A copolymer as claimed in any preceding claim having an SHI$_{5/300}$ of 90 to 150.

7. A copolymer as claimed in any preceding claim having an F$_{max}$/λ$_l$ ratio of 30 to 55.

8. A copolymer as claimed in any preceding claim wherein component (III) forms 1 to 12 wt% of the polymer.

9. A process for the preparation of a multimodal ethylene copolymer comprising:

   (I) polymerising ethylene in a first stage in the presence of a catalyst so as to form a first component **having an MFR$_2$ of 100 g/10min or more** which forms 30 to 60 wt% of said ethylene copolymer;
   (II) polymerising ethylene and at least one C3-20 alpha olefin comonomer in a second stage in the presence of the same catalyst so as to form a second component forming 30 to 60 wt% of said ethylene copolymer wherein the MFR$_5$ of the combination of components (I) and (II) is 0.1 to 15 g/10min; and
   (III) polymerising ethylene and at least one C3-20 alpha olefin comonomer in a third stage in the presence of the same catalyst so as to form a third component forming 0.5 to 12 wt% of said ethylene copolymer;

   wherein said multimodal ethylene copolymer has a density of at least 954 kg/m$^3$ when measured according to ISO 1183 / 1872-2B; and having an MFR$_5$ in the range of 0.01 to 10 g/10min, when measured according to ISO 1133 at 190 °C under 5 kg load; and a F$_{max}$/λ$_l$ ratio of less than 60 cN/s; wherein the MFR$_2$ (when measured according to ISO 1133 at 190 °C under 2.16 kg load) and the MFR$_5$ of component (I) is higher than that of component (II), wherein the Mw of component (III) is higher than that of the other two components, wherein the MFR$_5$ of component (II) is higher than that of component (III), and wherein the Mw/Mn of the multimodal ethylene copolymer is 10 to 20.

10. Use of a multimodal ethylene copolymer as claimed in claim 1 in the manufacture of an injection or rotomoulded article.

11. A bottle comprising a multimodal ethylene copolymer as claimed in claim 1.

**Patentansprüche**

1. Multimodales Ethylencopolymer mit einer Dichte von mindestens 954 kg/m$^3$, wenn diese gemäß ISO 1183 / 1872-2B gemessen wird; und das einen MFR$_5$ in dem Bereich von 0,01 bis 10 g/10 min aufweist, wenn dieser gemäß ISO 1133 bei 90 °C unter 5 kg Last gemessen wird; und das ein F$_{max}$/$\lambda_I$-Verhältnis von weniger als 60 cN/s aufweist; wobei das Ethylencopolymer mindestens drei Komponenten umfasst:

   (I) eine Ethylenhomopolymerkomponente, die einen MFR$_2$ von 100 g/10 min oder mehr aufweist und 30 bis 60 Gew.-% von dem Ethylencopolymer bildet;
   (II) eine zweite Komponente aus Ethylen und mindestens einem C3-20 alpha-Olefin-Comonomer, die 30 bis 60 Gew.-% von dem Ethylencopolymer bildet, wobei der MFR$_5$ von der Kombination der Komponenten (I) und (II) 0,1 bis 15 g/10 min beträgt; und
   (III) eine dritte Komponente aus Ethylen und mindestens einem C3-20 alpha-Olefin-Comonomer, die 0,5 bis 12 Gew.-% von dem Ethylencopolymer bildet;

   wobei der MFR$_2$ (wenn dieser gemäß ISO 1133 bei 190 °C unter 2,16 kg Last gemessen wird) und der MFR$_5$ von der Komponente (I) höher als der von der Komponente (II) sind, wobei das Mw der Komponente (III) höher als das der anderen zwei Komponenten ist, wobei der MFR$_5$ von der Komponente (II) höher als der von der Komponente (III) ist und wobei das Mw/Mn von dem multimodalen Ethylencopolymer 10 bis 20 beträgt.

2. Copolymer nach Anspruch 1, das einen MFR$_5$ von 0,1 bis 4 g/10 min aufweist.

3. Copolymer nach einem der vorhergehenden Ansprüche, wobei die Komponenten (I) bis (III) in situ gemischt werden.

4. Copolymer nach einem der vorhergehenden Ansprüche, das eine Dichte von 954 bis 965 kg/m$^3$ hat.

5. Copolymer nach einem der vorhergehenden Ansprüche, das unter Verwendung eines Ziegler-Natta-Katalysators hergestellt wird.

6. Copolymer nach einem der vorhergehenden Ansprüche, das einen SHI$_{5/300}$ von 90 bis 150 aufweist.

7. Copolymer nach einem der vorhergehenden Ansprüche, das ein F$_{max}$/$\lambda_I$-Verhältnis von 30 bis 55 aufweist.

8. Copolymer nach einem der vorhergehenden Ansprüche, wobei die Komponente (III) 1 bis 12 Gew.-% von dem Polymer bildet.

9. Verfahren für die Herstellung von einem multimodalen Ethylencopolymer, umfassend:

   (I) Polymerisieren von Ethylen in einer ersten Stufe in Gegenwart von einem Katalysator, um eine erste Komponente zu bilden, die einen MFR$_2$ von 100 g/10 min oder mehr aufweist und 30 bis 60 Gew.-% von dem Ethylencopolymer bildet;
   (II) Polymerisieren von Ethylen und mindestens einem C3-20 alpha-Olefin-Comonomer in einer zweiten Stufe in Gegenwart von demselben Katalysator, um eine zweite Komponente zu bilden, die 30 bis 60 Gew.-% von dem Ethylencopolymer bildet, wobei der MFR$_5$ von der Kombination der Komponenten (I) und (II) 0,1 bis 15 g/10 min beträgt; und
   (III) Polymerisieren von Ethylen und mindestens einem C3-20 alpha-Olefin-Comonomer in einer dritten Stufe in Gegenwart von demselben Katalysator, um eine dritte Komponente zu bilden, die 0,5 bis 12 Gew.-% von dem Ethylencopolymer bildet;

   wobei das multimodale Ethylencopolymer eine Dichte von mindestens 954 kg/m$^3$ aufweist, wenn diese gemäß ISO 1183 / 1872-2B gemessen wird; und einen MFR$_5$ in dem Bereich von 0,01 bis 10 g/10 min aufweist, wenn dieser gemäß ISO 1133 bei 90 °C und 5 kg Last gemessen wird; und ein F$_{max}$/$\lambda_I$-Verhältnis von weniger als 60 cN/s aufweist; wobei der MFR$_2$ (wenn dieser gemäß ISO 1133 bei 190 °C unter 2,16 kg Last gemessen wird) und der MFR$_5$ von der Komponente (I) höher als der von der Komponente (II) sind, wobei das Mw der Komponente (III) höher als das der anderen zwei Komponenten ist, wobei der MFR$_5$ von der Komponente (II) höher als der von der Komponente (III) ist und wobei das Mw/Mn von dem multimodalen Ethylencopolymer 10 bis 20 beträgt.

10. Verwendung von einem multimodalen Ethylencopolymer nach Anspruch 1 bei der Herstellung eines spritzgegossenen oder rotationsgeformten Artikels.

**11.** Flasche, umfassend ein multimodales Ethylencopolymer nach Anspruch 1.

**Revendications**

**1.** Copolymère d'éthylène multimodal ayant une masse volumique d'au moins 954 kg/m$^3$ quand elle est mesurée conformément à ISO 1183 / 1872-2B ; et ayant un MFR$_5$ dans la plage de 0,01 à 10 g/10 min, quand il est mesuré conformément à ISO 1133 à 190 °C sous une charge de 5 kg ; et un rapport F$_{max}$/$\lambda_1$ inférieur à 60 cN/s ; ledit copolymère d'éthylène comprenant au moins trois composants

    (I) un composant homopolymère d'éthylène **ayant un MFR$_2$ de 100 g/10 min** ou plus formant 30 à 60 % en poids dudit copolymère d'éthylène ;
    (II) un deuxième composant d'éthylène et d'au moins un comonomère d'alpha-oléfine en C3-20 formant 30 à 60 % en poids dudit copolymère d'éthylène dans lequel le MFR$_5$ de la combinaison des composants (I) et (II) est de 0,1 à 15 g/10 min ; et
    (III) un troisième composant d'éthylène et d'au moins un comonomère d'alpha-oléfine en C3-20 formant 0,5 à 12 % en poids dudit copolymère d'éthylène ;

dans lequel le MFR$_2$ (quand il est mesuré conformément à ISO 1133 à 190 °C sous une charge de 2,16 kg) et le MFR$_5$ du composant (I) sont supérieurs à celui du composant (II), dans lequel le Mw du composant (III) est supérieur à celui des deux autres composants, dans lequel le MFR$_5$ du composant (II) est supérieur à celui du composant (III), et dans lequel le Mw/Mn du copolymère d'éthylène multimodal est de 10 à 20.

**2.** Copolymère selon la revendication 1 ayant un MFR$_5$ de 0,1 à 4 g/10 min.

**3.** Copolymère selon l'une quelconque des revendications précédentes dans lequel les composants (I) à (III) sont mélangés *in situ.*

**4.** Copolymère selon l'une quelconque des revendications précédentes ayant une masse volumique de 954 à 965 kg/m$^3$.

**5.** Copolymère selon l'une quelconque des revendications précédentes préparé en utilisant un catalyseur Ziegler Natta.

**6.** Copolymère selon l'une quelconque des revendications précédentes ayant un SHI$_{5/300}$ de 90 à 150.

**7.** Copolymère selon l'une quelconque des revendications précédentes ayant un rapport F$_{max}$/$\lambda_1$ de 30 à 55.

**8.** Copolymère selon l'une quelconque des revendications précédentes dans lequel le composant (III) forme 1 à 12 % en poids du polymère.

**9.** Procédé pour la préparation d'un copolymère d'éthylène multimodal comprenant :

    (I) la polymérisation d'éthylène dans une première étape en présence d'un catalyseur de manière à former un premier composant **ayant un MFR$_2$ de 100 g/10 min ou plus** qui forme 30 à 60 % en poids dudit copolymère d'éthylène ;
    (II) la polymérisation d'éthylène et d'au moins un comonomère d'alpha-oléfine en C3-20 dans une deuxième étape en présence du même catalyseur de manière à former un deuxième composant formant 30 à 60 % en poids dudit copolymère d'éthylène, dans lequel le MFR$_5$ de la combinaison des composants (I) et (II) est de 0,1 à 15 g/10 min ; et
    (III) la polymérisation d'éthylène et d'au moins un comonomère d'alpha-oléfine en C3-20 dans une troisième étape en présence du même catalyseur de manière à former un troisième composant formant 0,5 à 12 % en poids dudit copolymère d'éthylène ;

dans lequel ledit copolymère d'éthylène multimodal a une masse volumique d'au moins 954 kg/m$^3$ quand elle est mesurée conformément à ISO 1183 / 1872-2B ; et ayant un MFR$_5$ dans la plage de 0,01 à 10 g/10 min, quand il est mesuré conformément à ISO 1133 à 190 °C sous une charge de 5 kg ; et un rapport F$_{max}$/$\lambda_1$ inférieur à 60 cN/s ;

dans lequel le MFR$_2$ (quand il est mesuré conformément à ISO 1133 à 190 °C sous une charge de 2,16 kg) et le MFR$_5$ du composant (I) sont supérieurs à celui du composant (II), dans lequel le Mw du composant (III) est supérieur à celui des deux autres composants, dans lequel le MFR$_5$ du composant (II) est supérieur à celui du composant (III), et dans lequel le Mw/Mn du copolymère d'éthylène multimodal est de 10 à 20.

10. Utilisation d'un copolymère d'éthylène multimodal selon la revendication 1 dans la fabrication d'un article moulé par injection ou rotomoulé.

11. Bouteille comprenant un copolymère d'éthylène multimodal selon la revendication 1.

**Figure 1.** $F_{max}/\lambda_I$ ratio of different examples

**Figure 2.** Complex viscosity vs complex modulus of examples and commercial reference FS1560.

**Figure 3.** Die swell as a function of apparent shear rate.

**Figure 4.** Melt temperature and melt pressure during blow moulding.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1655334 A
- EP 1712574 A
- US 20060178482 A
- WO 9618677 A
- EP 2011822 A
- WO 2009003627 A
- WO 9535323 A
- WO 0155230 A
- EP 810235 A
- WO 9951646 A
- WO 03106510 A
- EP 0810235 A
- EP 0517868 A
- WO 0022040 A

### Non-patent literature cited in the description

- **K. K. MCAULEY ; J. F. MCGREGOR.** On-line Inference of Polymer Properties in an Industrial Polyethylene Reactor. *AIChE Journal,* June 1991, vol. 37 (6), 825-835
- **BAUMGÄRTEL M ; WINTER HH.** Determination of the discrete relaxation and retardation time spectra from dynamic mechanical data. *Rheol Acta,* 1989, vol. 28, 511519
- **JOHN DEALY ; RONALD G. LARSON.** Structure and Rheology of Molten Polymers. Hanser, 2006, 119
- **HEINO, E.L. ; LEHTINEN, A. ; TANNER J. ; SEPPÄLÄ, J. ; NESTE OY.** Rheological characterization of polyethylene fractions. *Theor. Appl. Rheol., Proc. Int. Congr. Rheol,* 1992, vol. 1, 360-362
- The influence of molecular structure on some rheological properties of polyethylene. **HEINO, E.L.** Annual Transactions of the Nordic Rheology Society. Borealis Polymers Oy, 1995
- **M. H. WAGNER.** Rheotens-Mastercurves and Drawability of Polymer Melts. *Polymer Engineering and Sience,* vol. 36, 925-935